# EUROPÄISCHE PATENTSCHRIFT

(11) **EP 2 217 835 B1**
(45) Veröffentlichungstag und Bekanntmachung des Hinweises auf die Patenterteilung: **19.10.2011**
(21) Anmeldenummer: 08856676.5
(22) Anmeldetag: 04.12.2008
(51) Int. Cl.: F16H 59/10, F16H 61/22

(54) **BETÄTIGUNGSEINRICHTUNG MIT SPERRANORDNUNG**
OPERATING DEVICE WITH A LOCKING ASSEMBLY
DISPOSITIF D'ACTIONNEMENT POURVU D'UN SYSTÈME DE BLOCAGE

(30) Priorität: 05.12.2007 DE 102007058850
(43) Veröffentlichungstag der Anmeldung: 18.08.2010
(73) Patentinhaber: ZF Friedrichshafen AG, 88038 Friedrichshafen (DE)
(72) Erfinder: GIEFER, Andreas, 49448 Lemförde (DE); RAKE, Ludger, 49439 Steinfeld (DE); ROSENTRETER, Sascha, 32339 Espelkamp (DE)
(86) Internationale Anmeldenummer: PCT/DE2008/050036
(87) Internationale Veröffentlichungsnummer: WO 2009/071081

(56) Entgegenhaltungen:
- WO-A-2007/009415
- WO-A-2008/116874
- DE-A1-102007 019 465
- US-A1- 2006 016 287

## Beschreibung

Die Erfindung betrifft eine Betätigungseinrichtung für ein Gangwechselgetriebe, beispielsweise für ein Automatgetriebe mit shift-by-wire-Betätigung, gemäß dem Oberbegriff des Patentanspruchs 1.

Gangwechselgetriebe von Kraftfahrzeugen werden üblicherweise mittels einer im Griffbereich des Fahrers angeordneten Betätigungseinrichtung geschaltet bzw. gesteuert. Regelmäßig kommen hierzu Betätigungselemente wie Schalthebel oder Wählhebel zum Einsatz, die beispielsweise zwischen den Frontsitzen des Kraftfahrzeugs angeordnet sind.

Bei modernen Betätigungseinrichtungen wird insbesondere gefordert, dem Fahrer aus Gründen der Sicherheit und Ergonomie ein realistisches Gefühl der Getriebebetätigung zu vermitteln. Daher ist es erforderlich, dass dem Fahrer nicht nur optische, sondern auch klare haptische bzw. taktile Rückmeldungen über den aktuellen Schalt- bzw. Betriebszustand des Getriebes vermittelt werden.

Insbesondere bei shift-by-wire-gesteuerten Gangwechselgetrieben - worunter auch die meisten aktuellen Automatgetriebe fallen - wird aus Gründen der Ergonomie und Sicherheit dabei gefordert, dass dem Fahrer etwaige momentan nicht zulässige Schaltzustände bzw. Schaltoperationen in Form entsprechender Sperrungen der zugehörigen Bedienpositionen des Wählhebels sowohl optisch als auch haptisch signalisiert werden.

Denn im Fall der zunehmend eingesetzten elektrischen bzw. shift-by-wire-Betätigung von Gangwechselgetrieben existiert keine mechanische Kopplung mehr zwischen dem Wählhebel in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe beim "shift-by-wire"-Getriebe mittels elektrischer oder elektronischer Signale und anschließender zumeist elektrohydraulischer Umsetzung der Schaltbefehle am Getriebe.

Bei den shift-by-wire-betätigten Gangwechselgetrieben führt die fehlende mechanische Verbindung zwischen der Getriebeaktuatorik und dem Wählhebel jedoch dazu, dass der Getriebezustand oder etwaige im Getriebe eingelegte Schaltsperren nicht mehr direkt auf den Zustand des Wählhebels rückwirken. Der Fahrer kann somit nicht ohne weiteres anhand bestimmter am Wählhebel spürbar blockierter Schaltstellungen erkennen, dass einige Hebelstellungen, Fahrstufen bzw. Getriebezustände im momentanen Fahrzustand eventuell nicht zulässig sind und somit auch nicht angewählt werden können.

In Abhängigkeit des Zustands des zu bedienenden Gangwechselgetriebes sowie in Abhängigkeit anderer Zustandsfaktoren am Kraftfahrzeug - Zündung eingeschaltet, Motor läuft, Fahrzeuggeschwindigkeit etc. - ist es zur Realisierung des haptischen Feedback bei shift-by-wire-gesteuerten Getrieben somit im allgemeinen notwendig, den Betätigungsbereich des Wählhebels je nach Getriebezustand aktuatorisch gesteuert einzuschränken. Auf diese Weise kann dem Fahrer beim Griff nach dem Wählhebel auch bei einem shift-by-wire-Getriebe haptisch spürbar vermittelt werden, dass sein Schaltwunsch - beispielsweise aufgrund des aktuellen Betriebs- oder Fahrzustand des Kraftfahrzeugs bzw. aufgrund des momentanen Betriebszustands des Gangwechselgetriebes - nicht zulässig und damit gesperrt ist.

Von besonderer Bedeutung sind die dargestellten Zusammenhänge auch in Bezug auf monostabile Betätigungseinrichtungen für shift-by-wire-Getriebe. Monostabile Wählhebel werden gerne bei by-wire-geschalteten Getrieben eingesetzt, da dann auf eine aufwändige Aktuatorik zur Nachführung des Wählhebels bei etwaiger selbsttätiger Zustandsänderung im Getriebe verzichtet werden kann, beispielsweise im Fall der automatisch eingelegten Parksperre (Auto-P).

Der Wählhebel weist bei einer monostabilen Betätigungseinrichtung eine stabile (Mittel-)Stellung und zumeist mehrere nichtstabile Stellungen in verschiedenen Richtungen ausgehend von der stabilen (Mittel-)Stellung auf. Dabei kommen jedoch je nach Getriebezustand zumeist nur einige der mechanisch insgesamt vorhandenen Wählhebelstellungen jeweils für die tatsächliche Schaltbetätigung in Frage. Andere, vom Wählhebel her gesehen mechanisch zwar mögliche Wählhebelstellungen können bzw. dürfen hingegen - je nach Getriebezustand - keine sinnvolle Schaltbetätigung auslösen, und müssen daher aktuatorisch gesperrt werden, um dem Fahrer am Wählhebel eine konsistente Haptik sowie ein zuverlässiges Feedback über etwaige Schaltsperren zu vermitteln.

Beispielsweise darf sich ein monostabiler Wählhebel, sofern sich das Getriebe im Zustand "Parksperre" befindet, nicht weiter in Fahrtrichtung nach vorne verschieben lassen, auch wenn der Wählhebel für sich genommen aus seiner Mittelstellung heraus zunächst noch frei nach vorne beweglich wäre. Vielmehr muss eine entsprechende Aktuatorik dafür sorgen, dass der Wählhebel in diesem Beispielfall nur fahrtrichtungsbezogen nach hinten bewegt werden kann.

Wie zum Beispiel aus der US 2006/0016287 A1 oder aus der DE 10 2005 033 510 A1, der den nächstliegenden Stand der Technik repräsentiert ersichtlich, ist versucht worden, dieser Problematik damit zu begegnen, dass Wählhebel von shift-by-wire-gesteuerten Gangwechselgetrieben mit mehrfachwirkenden Aktuatoren sowie mit entsprechenden Hebel- bzw. Getriebeelementen zur selektiven Sperrung unzulässiger Schaltbefehle versehen worden sind. Diese Aktuatoren und die damit gesteuerten Hebel- bzw. Getriebeelemente werden in Abhängigkeit des Fahrzeug- bzw. Getriebezustands geschaltet, um so den ursprünglichen Gesamtbewegungsbereich des Wählhebels entsprechend des momentanen Fahr- oder Getriebezustands einzuschränken, oder auch um den Wählhebel in bestimmten Fällen komplett zu sperren.

Muss dabei jedoch eine Mehrzahl unterschiedlicher Wählhebelstellungen in unterschiedlichen Kombinationen aktuatorisch gesperrt oder der Bewegungsbereich des Wählhebels variabel innerhalb eines Winkelbereichs positioniert werden, so ist hierzu im Stand der Technik häufig eine komplexe Sperrmimik erforderlich. Dies hat unerwünschte Auswirkungen aufgrund des damit verbundenen Aufwands und der entsprechenden Kostenerhöhungen. Auch Probleme mit dem zur Verfügung stehenden Bauraum im Bereich der Betätigungseinrichtung können mit einer solchen herkömmlichen Sperraktuatorik verbunden sein. Die aus dem Stand der Technik bekannten Sperreinrichtungen neigen ferner zur Erzeugung erheblicher Geräuschpegel, und können das Problem mit sich bringen, dass aufgrund vergleichsweise langsamer Schaltzeiten der Sperrvorrichtungen unter Umständen ein Überfahren einer der Wählhebelsperren und damit verbundene undefinierte Betriebszustände der Betätigungseinrichtung auftreten können.

Mit diesem Hintergrund ist es Aufgabe der vorliegenden Erfindung, eine Betätigungseinrichtung mit Sperrvorrichtung zu schaffen, insbesondere für die elektrische bzw. elektronische shift-by-wire-Betätigung eines Gangwechselgetriebes, mit der sich die genannten Nachteile des Standes der Technik überwinden lassen. Insbesondere soll die Sperreinrichtung dabei auch im Fall einer komplexen Sperrlogik einfach aufgebaut sein, es sollen schnelle Schaltzeiten und eine geringe Geräuschentwicklung erreicht werden, und undefinierte Betriebszustände bzw. Hakeln des Wählhebels soll zuverlässig unterbunden werden. Ferner soll die Betätigungseinrichtung mit einem möglichst geringen Bauraum auskommen.

Diese Aufgabe wird durch eine Betätigungseinrichtung mit den Merkmalen des Patentanspruchs 1 gelöst.

Bevorzugte Ausführungsformen sind Gegenstand der Unteransprüche.

In für sich genommen zunächst bekannter Weise umfasst die Betätigungseinrichtung gemäß der vorliegenden Erfindung einen - innerhalb mindestens einer Schaltgasse bewegbaren - Wählhebel mit zumindest drei Fahrstufenstellungen sowie einen Sockel und eine Sperrvorrichtung. Dabei dient die Sperrvorrichtung zur steuerbaren Einschränkung des Bewegungsbereichs des Wählhebels, zum Ausschluss bestimmter Wählhebelstellungen oder zur Blockierung des Wählhebels, in Abhängigkeit insbesondere vom Schaltzustand des Getriebes oder vom Fahrzustand des Kraftfahrzeugs.

Erfindungsgemäß zeichnet sich die Betätigungseinrichtung jedoch dadurch aus, dass die Sperrvorrichtung eine mit dem Wählhebel verbundene Auslegeranordnung mit einer Mehrzahl von Sperrkonturen aufweist. Dabei ist jede Sperrkontur der Auslegeranordnung einer Wählhebelstellung zugeordnet, und jede der Sperrkonturen ist mit jeweils einem aktuatorisch aktivierbaren Sperrelement dergestalt in Eingriff bringbar, dass durch Sperrkontur und Sperrelement ein Bewegungsanschlag für den Wählhebel gebildet wird.

Gegenüber dem Stand der Technik, aus dem Betätigungseinrichtungen bekannt sind, die entweder Aktuatoren mit mehreren Betriebsstellungen (wie beispielsweise doppeltwirkende Elektromagneten), servoelektrische Getriebeaktuatoren oder Getriebeübersetzungselemente aufweisen, wird dank der Erfindung insbesondere eine Verringerung des mit der Betätigung der Sperrvorrichtung verbundenen Geräuschpegels erreicht, es ergeben sich schnellere Reaktionszeiten der Sperrvorrichtung, und es lässt sich eine größere Sicherheit gegen versehentliches Überfahren einer Sperre und damit verbundene undefinierte Betriebszustände der Betätigungseinrichtung erzielen.

Verwirklichen lässt sich die Erfindung zunächst einmal unabhängig davon, wie die Sperrelemente und die zugehörige Aktuatorik ausgeführt und konstruktiv ausgebildet wird. So ist es beispielsweise denkbar, die Sperraktuatoren als hydraulische bzw. pneumatische Zylinder oder als elektromotorische Aktuatoren auszuführen. Gemäß einer besonders bevorzugten Ausführungsform der Erfindung sind die Sperrelemente jedoch durch ausfahrbare Bolzen von Aktuatoren gebildet, wobei die Sperrelemente vorzugsweise jeweils durch die beweglichen Anker von Elektromagneten gebildet sind. Auf diese Weise ergibt sich eine besonders kompakte Gestaltung der Betätigungseinrichtung, eine besonders geringe Masse der Sperrelemente, und damit besonders schnelle Reaktionszeiten und eine hohe Sicherheit gegen Hakeln oder unerwünschtes Überfahren von Sperren.

Gemäß einer weiteren bevorzugten Ausführungsform der Erfindung ist die Auslegeranordnung einstückig mit dem Schaft des Wählhebels ausgebildet. Auch diese Ausführungsform steht vor allem im Dienst einer besonders kostengünstigen, robusten, massearmen und kompakten Ausführung der Betätigungseinrichtung.

Eine weitere bevorzugte Ausführungsform der Erfindung sieht einen quer zur Hauptbetätigungsrichtung des Wählhebels verschieblich angeordneten Querschieber vor. Dabei weist der Querschieber ein den Wählhebel im Sockelbereich der Betätigungseinrichtung umschließendes Langloch auf, wodurch der Wählhebel bezüglich seiner Hauptbetätigungsrichtung gegenüber dem Querschieber frei beweglich ist, Bewegungen quer zur Hauptbetäligungsrichtung des Wählhebels über die Längskanten des Langlochs jedoch auf den Querschieber übertragen werden. Ferner ist der Querschieber durch einen Sperraktuator der Betätigungseinrichtung blockierbar.

Auf diese Weise kann die Erfindung auch auf Betätigungseinrichtungen bzw. Wählhebel mit mehreren Schaltgassen, insbesondere auf solche mit Wählgasse und Tippgasse, ausgedehnt werden. Denn dank des aktuatorisch blockierbaren Querschiebers, der den Wählhebel mit seinem Langloch umschließt, so dass mittels Querbewegungen des Wählhebels zwischen dessen Schaltgassen eine schiebende Betätigung des Querschiebers erfolgt, kann die Bewegung des Wählhebels aus der Wählgasse in die Tippgasse aktuatorisch blockiert werden. Dies ist insbesondere dann von Bedeutung, falls aufgrund des aktuellen Fahrzustands des Kraftfahrzeugs bzw. aufgrund des aktuellen Betriebszuslands des Getriebes ein Wechsel zwischen Automatikbetrieb und Tippbetrieb nicht zulässig sein sollte. Auch bezüglich des Querschiebers ist der zugehörige Sperraktuator vorzugsweise wieder als Elektromagnet mit ausfahrbarem Ankerbolzen ausgebildet. Dabei ist der Ankerbolzen zur Blockierung des Querschiebers bevorzugt unmittelbar mit mindestens einer entsprechenden Ausnehmung im Querschieber in Eingriff bringbar.

Gemäß einer weiteren bevorzugten Ausführungsform der Erfindung weist die Betätigungseinrichtung eine Aktuatoreinrichtung zur aktuatorischen Rückführung des Wählhebels aus der Tippgasse in die Wählgasse auf. Dank dieser Ausführungsform lässt sich vermeiden, dass sich der Wählhebel - im Fall der automatisch eingelegten Parksperre (Auto-P) und bei gleichzeitig in der Tippgasse belassenem Wählhebel - beim nächsten Fahrtbeginn in einer nicht mit dem Getriebezustand "Parksperre" übereinstimmenden Stellung befindet.

Wurde der Wählhebel in der Tippgasse belassen, so würde die Wählhebelstellung nicht mehr mit dem tatsächlichen Schaltzustand des Getriebes übereinstimmen. Bei der Rückkehr zum Fahrzeug, bzw. bei einem Startversuch des Fahrzeugs würde anhand der Wählhebelstellung daher optisch zunächst eine unzutreffende Information an den Fahrer gegeben. Anhand der Wahrnehmung der Wählhebelstellung müsste der Fahrer davon ausgehen, dass sich das Getriebe in einer Fahrstufenstellung befindet, während im Getriebe hingegen tatsächlich die Parksperre eingelegt ist.

Um eine solche Fehlinformation des Fahrers zu verhindern, müsste somit eigens eine zusätzliche Signaleinrichtung für den Fahrer vorgesehen werden, die dem Fahrer für den Fall der per Auto-P eingelegten Parksperre signalisiert, dass das Fahrzeug erst gestartet werden kann, wenn der Wählhebel zunächst einmal manuell in die monostabile Stellung gebracht wird.

Die Aktuatoreinrichtung zur aktuatorischen Rückstellung des Wählhebels weist vorzugsweise ein Segment-Schneckengetriebe oder ein Spindelgetriebe auf. Auf diese Weise kann die Aktuatoreinrichtung besonders platzsparend ausgebildet werden und weist gleichzeitig ein hohes Übersetzungsverhältnis auf. Hierdurch kann insbesondere ein kleiner Elektromotor zum Antrieb der Aktuatoreinrichtung eingesetzt werden, und weitere Getriebestufen für die Aktuatoreinrichtung können ggf. wegfallen.

Eine weitere Ausführungsform der Erfindung sieht vor, dass die Aktuatoreinrichtung einen federbelasteten Freilauf aufweist. Dabei wirken sowohl Freilauf als auch Freilauffeder in Betätigungsrichtung der Aktuatoreinrichtung.

Auf diese Weise können Fehlfunktionen oder Beschädigungen der Aktuatoreinrichtung vermieden werden, falls der Wählhebel in der Tippgasse festgehalten oder durch einen Gegenstand in der Tippgasse blockiert sein sollte, während die automatische Rückführung des Wählhebels aus der Tippgasse in die Wählgasse mittels der Aktuatoreinrichtung erfolgt. Statt sofortiger Rückführung des Wählhebels aus der Tippgasse in die Wählgasse wird durch die Aktuatoreinrichtung in diesem Fall unter Öffnung des Freilaufs lediglich die Freilauffeder vorgespannt. Sobald der Wählhebel losgelassen oder die Blockierung des Wählhebels aufgehoben wird, kehrt der Wählhebel aufgrund der in der Freilauffeder gespeicherten Federenergie in die Wählgasse zurück.

Insbesondere mit dem Hintergrund der eingangs genannten variablen Positionierbarkeit eines bestimmten Bewegungsbereichs des Wählhebels (durch aktuatorische Sperrung der jeweils außerhalb des gewünschten Bewegungsbereichs liegenden Wählhebelstellungen) ist es gemäß einer weiteren, besonders bevorzugten Ausführungsform der Erfindung vorgesehen, dass der Wählhebel monostabil ausgebildet ist.

Dies bedeutet zunächst einmal, dass der Wählhebel nach jeder Schaltbetätigung federbelastet wieder in dieselbe Mittelstellung zurückkehrt. Ein monostabiler Wählhebel ist vor allem bei der Betätigung von shift-by-wire-gesteuerlen Getrieben von Vorteil, da auf diese Weise auf eine motorische Nachführung des Wählhebels bei etwa automatisch eingelegten Getriebefahrstufen - wie beispielsweise im Fall einer per "Auto-P" selbsttätig eingelegten Parksperre - verzichtet werden kann. Stattdessen muss bei derartigen monostabil ausgebildeten Wählhebeln primär lediglich die Anzeige der Getriebefahrstufe nachgeführt bzw. jeweils aktualisiert und an den aktuellen Getriebezustand angepasst werden.

Für den Fahrer bedeutet dies jedoch, dass die Rückmeldung über den tatsächlichen Schaltzustand des Getriebes zunächst einmal ausschließlich der separaten Anzeige beispielsweise mittels Leuchtdioden oder Anzeigesymbolen überlassen bleibt. Hingegen entfällt bei einem monostabilen Wählhebel die Möglichkeit, dem Fahrer anhand der reinen Wählhebelstellung optische bzw. haptische Rückmeldung über den Schaltzustand des Getriebes zu vermitteln.

Bei aus dem Stand der Technik bekannten monostabilen Wählhebeln aufwändig ist ferner die Realisierung der korrekten mechanischen Schaltlogik, also der mechanische Nachvollzug des jeweils zulässigen Bewegungswinkelbereichs des Wählhebels. Der erfindungsgemäße Einsatz einer Sperrvorrichtung mit einer Auslegeranordnung und einer Mehrzahl von Sperrkonturen bringt jedoch auch hier Vorteile mit sich. Denn dank des separat aktivierbaren Sperrelements jeder Sperrkontur lässt sich mittels Sperrung der jeweils nicht zum Bewegungsbereich gehörigen Wählhebelstellungen der jeweils zulässige Bewegungsbereich des Wählhebels variabel innerhalb des gesamten mechanisch zur Verfügung stehenden Bewegungsfensters des Wählhebels positionieren.

Letzteres ist bei einem monostabilen Wählhebel von Bedeutung insofern, als die vom Wählhebel nach der Betätigung stets selbsttätig wieder eingenommene Mittelstellung zunächst einmal jedem beliebigen tatsächlichen Schaltzustand des Getriebes zugeordnet sein kann. Insbesondere kann der in seiner stabilen Mittelstellung verharrende Wählhebel prinzipiell für jede der standardmäßigen Getriebefahrstufen "P", "R", "N" oder "D" stehen. In welcher der Fahrstufen sich das Getriebe tatsächlich befindet, wird dem Fahrer lediglich durch eine entsprechende variable Anzeigevorrichtung am Wählhebel oder auf den Fahrzeugarmaturen angezeigt.

Dank des erfindungsgemäßen Einsatzes einer Sperreinrichtung mit Auslegeranordnung und einer Mehrzahl von Sperrkonturen und zugehörigen Sperrelementen kann jedoch auch bei einem monostabilen Wählhebel das Verhalten eines üblichen multistabilen Wählhebels mit mehreren stabilen Wählhebelpositionen in Bezug darauf nachgebildet werden, dass der Bewegungsbereich des Wählhebels von der im Getriebe jeweils tatsächlich eingelegten Fahrstufe abhängt. Ist im Getriebe also beispielsweise die Parksperre eingelegt, so lässt sich ein konventioneller Wählhebel um keine weitere Stufe nach vorne, jedoch im allgemeinen um zwei bis vier Stufen nach hinten bewegen, bevor er an dem der Parksperrenstellung gegenüberliegenden Anschlag der Betätigungseinrichtung bzw. am gegenüberliegenden Ende einer Wählhebelkulisse anschlägt.

Dank der Erfindung lässt sich dieses der intuitiven Bedienbarkeit und haptischen Erkennbarkeit des Getriebezustands dienliche Verhalten auch bei einem monostabilen Wählhebel konstruktiv vergleichsweise einfach realisieren, indem - durch Aktivierung der jeweiligen Sperrelemente - der aktuell zulässige Bewegungsbereich des Wählhebels jeweils so innerhalb des gesamten konstruktiven Bewegungsfensters des Wählhebels verschoben wird, dass Bewegungen des Wählhebels nur in derjenigen Richtung und nur um so viele Schaltstufen möglich sind, wie dies logisch mit der eingelegten Getriebefahrstufe korrespondiert.

Eine weitere Ausführungsform der Erfindung schließlich sieht vor, dass die Sperrkonturen elastomere Anschlagsdämpfer aufweisen, beispielsweise in Form von elastomeren Inserts oder Anspritzungen im Bereich der Sperrausnehmungen. Hierdurch wird eine besonders gute Geräuschdämpfung bei den Schalt-, Betätigungs- bzw. Sperrvorgängen erreicht.

Im Folgenden wird die Erfindung anhand lediglich Ausführungsbeispiele darstellender Zeichnungen näher erläutert. Es zeigt:
- **Fig. 1**: in schematischer isometrischer Ansicht eine Ausführungsform einer Betätigungseinrichtung gemäß der vorliegenden Erfindung;
- **Fig. 2**: in einer **Fig. 1** entsprechenden Darstellung und Ansicht Wählhebel, Sperrvorrichtung und Aktuatoreinrichtung der Betätigungseinrichtung gemäß **Fig. 1****,** mit entferntem Gehäusesockel;
- **Fig. 3**: in einer **Fig. 1** entsprechenden Darstellung Wählhebel und Aktuatoreinrichtung der Betätigungseinrichtung gemäß **Fig. 1** und 2 in schräger Draufsicht, mit entfernter Sperraktuatorik;
- **Fig. 4**: in einer **Fig. 1** bis 3 entsprechenden Darstellung Wählhebel und Sperrschieber der Betätigungseinrichtung gemäß **Fig. 1** bis **3****,** Wählhebel in der Tippgasse; und
- **Fig. 5**: in einer **Fig. 4** entsprechenden Darstellung und Ansicht Wählhebel und Sperrschieber gemäß **Fig. 4****,** Wählhebel in der Schaltgasse.

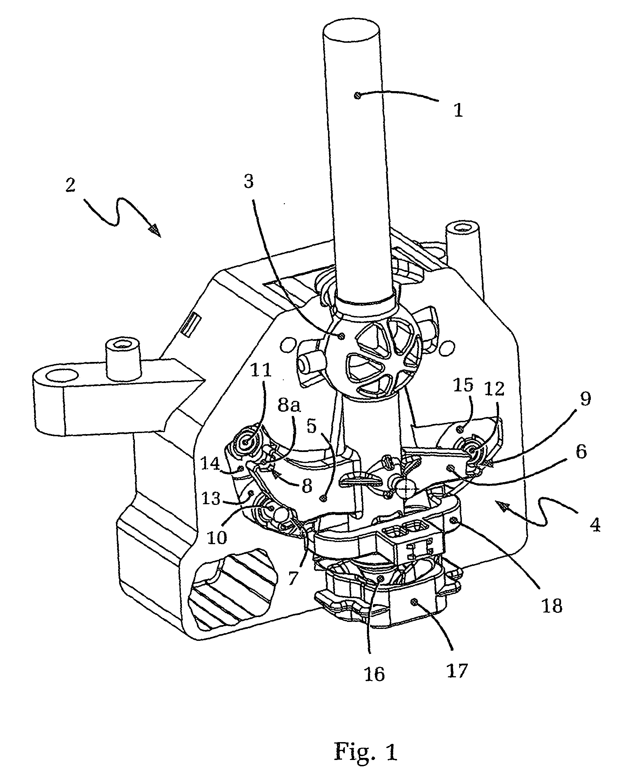

**Fig. 1** zeigt in schematisch ausgeführter isometrischer Darstellung eine Ausführungsform einer Betätigungseinrichtung gemäß der vorliegenden Erfindung. Man erkennt zunächst einmal den Wählhebel 1 sowie das Sockelgehäuse 2 der Betätigungseinrichtung. Vom Sockelgehäuse 2 wurde die fahrtrichtungsbezogen rechte Gehäusehälfte entfernt, um die im Gehäuse 2 angeordnete Schwenklagerung 3 für den Wählhebel 1 sowie die ebenfalls im Sockel 2 angeordnete Sperrvorrichtung 4 darstellen zu können.

Man erkennt, dass die Sperrvorrichtung 4 zunächst einmal eine Auslegeranordnung mit zwei Auslegern 5, 6 umfasst. Die Ausleger 5, 6 besitzen Sperrkonturen 7, 8, 9, wobei die Ausleger 5, 6 und damit auch die Sperrkonturen 7, 8, 9 einstückig mit dem Wählhebel 1 ausgebildet sind.

Formkorrespondierend zu den Sperrkonturen 7, 8, 9 sind Sperrelemente bzw. Sperranker 10, 11, 12 vorgesehen, wobei die Sperrelemente 10, 11, 12 durch die axial verschieblichen Anker von Elektromagneten 13, 14, 15 gebildet werden.

Die Anker 10, 11, 12 lassen sich durch die elektromagnetischen Aktuatoren 13, 14, 15 einzeln axial ausfahren und bilden dann jeweils zusammen mit der zugehörigen Sperrkontur 7, 8, 9 einzeln ansteuerbare Sperranschläge für den Wählhebel 1. Um eine besonders gute Geräuschdämpfung zu erreichen, sind die Sperrkonturen 7, 8, 9 bei der dargestellten Ausführungsform jeweils mit elastomeren Inserts versehen (siehe beispielsweise Insert 8a in der Sperrkontur 8, ebensolche Inserts sind auch bei den anderen Sperrkonturen 7 und 9 vorhanden).

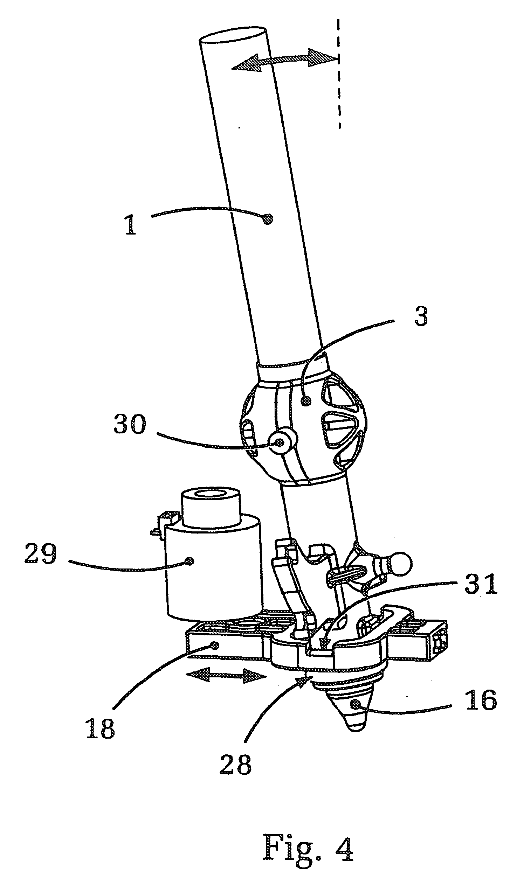

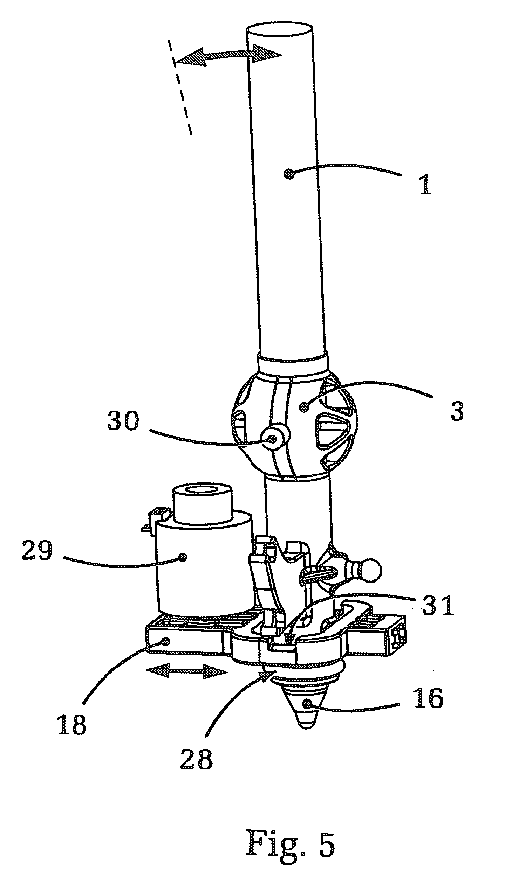

Bei der dargestellten Ausführungsform dienen die beiden Sperrkonturen 7 und 9 sowie die zugehörigen Sperranker 10 und 12 der Begrenzung des Schwenkbereichs des Wählhebels 1 in der in **Fig. 1** dargestellten Mittelstellung des Wählhebels 1. Dies bedeutet mit anderen Worten, dass der Wählhebel 1 in der gezeigten Mittelstellung komplett blockiert werden kann, wenn sowohl der Sperranker 10 als auch der Sperranker 12 aktiviert bzw. ausgefahren ist. Der Sperrung in der Mittelstellung des Wählhebels 1 kann funktionell beispielsweise die Shiftlock-Sperre entsprechen, bei der der Wählhebel solange in der (dann die Parksperrenstellung repräsentierenden) Mittelstellung gesperrt verbleibt, bis die Zündung eingeschaltet und das Bremspedal getreten wird. Vorzugsweise wird der Wählhebel im Fall der Shiftlock-Sperre auch bezüglich zeitlicher Schwenkbewegungen zwischen Wählgasse und Tippgasse gesperrt, wozu Querschieber 18 und zugehöriger Sperraktuator 29 zum Einsatz kommen, vgl. Fig. 4 und 5.

Durch die Sperrkontur 8 und den zugehörigen Sperranker 11 wird ein weiterer Anschlag für den Wählhebel 1 gebildet. Dieser Anschlag 8, 11 wird bei Auslenkung des Wählhebels 1 um eine Fahrstufenstellung fahrtrichtungsbezogen nach vorne (zeichnungsbezogen nach rechts) wirksam, sofern der zugehörige Sperranker 11 ausgefahren ist. Hierdurch wird somit der Bewegungsbereich des Wählhebels 1 nach vorne entsprechend reduziert bzw. eingeschränkt. Auf diese Weise lässt sich z.B. das Wählen des Rückwärtsganges während der Fahrt vermeiden, falls sich das Getriebe beispielsweise in der Betriebsstellung "D" wie Drive befindet. Auf ähnliche Weise könnten - neben den ohnehin vorhandenen statischen Endanschlägen des Wählhebels 1 am Gehäuse 2 und zusätzlich zu den bei der dargestellten Ausführungsform vorhandenen drei Anschlagspositionen - durch Anordnung weiterer Sperrkonturen und Sperranker weitere Anschläge für weitere Winkelstellungen des Wählhebels 1 realisiert werden.

In **Fig. 1** ferner erkennbar ist der Rastierpin 16, der in Wählhebel-axialer Richtung unter Federspannung stehend beweglich im unteren Ende des Wählhebels 1 angeordnet ist. Das (nicht sichtbare) Ende des Rastierpins 16 ist dabei in einer Rastierkulisse 17 aufgenommen. Die im Inneren im Wesentlichen trichterförmige Gestalt der Rastkulisse 17 führt zusammen mit der Federbelastung des Rastierpins 16 dazu, dass der Wählhebel 1 aus jeder Stellung innerhalb einer der Wählhebel-Schaltgassen angefedert wieder in seine Mittelstellung zurückkehrt.

Ferner zeigt **Fig. 1** noch den zur Sperrung der seitlichen Schwenkbewegung des Wählhebels 1 zwischen Wählgasse und Tippgasse dienenden Querschieber 18. Der Querschieber 18 ist in der Figurenbeschreibung zu den **Fig. 4** und **5** näher beschrieben.

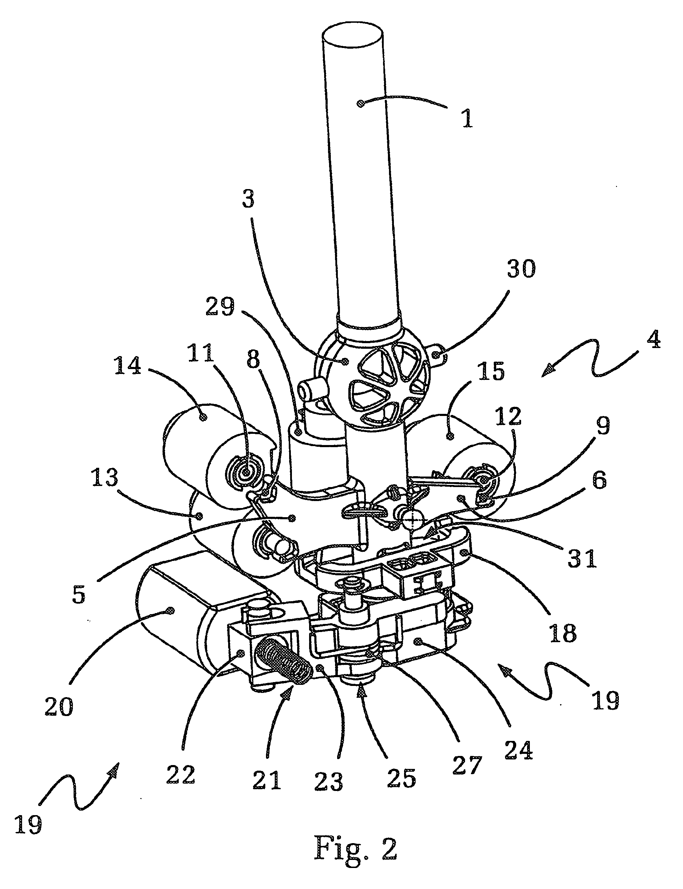

**Fig. 2** zeigt nochmals die Anordnung aus Wählhebel 1 und Sperrvorrichtung 4 gemäß **Fig. 1****,** wobei in der Darstellung gemäß **Fig. 2** das Gehäuse 2 weggelassen wurde. Hierdurch werden insbesondere die elektromagnetischen Aktuatoren 13, 14, 15 zur Bewegung der Sperranschläge 10, 11, 12 deutlicher erkennbar. Ferner ist in **Fig. 2** im Unterschied zu **Fig. 1** zusätzlich noch die Aktuatoreinrichtung 19 zur aktuatorischen Rückstellung des Wählhebels 1 aus der Tippgasse in die Wählgasse dargestellt. Die Aktuatoreinrichtung 19 umfasst einen Elektromotor 20, auf dessen Abtriebswelle eine Gewindespindel 21 angeordnet ist. Auf der Gewindespindel 21 läuft eine Spindelmutter 22, welche über einen Aktuatorhebel 23, 24 auf das untere Ende des Wählhebels 1 wirkt. Dabei ist der Aktuatorhebel 23, 24 auf einer Schwenkachse 25 gelagert.

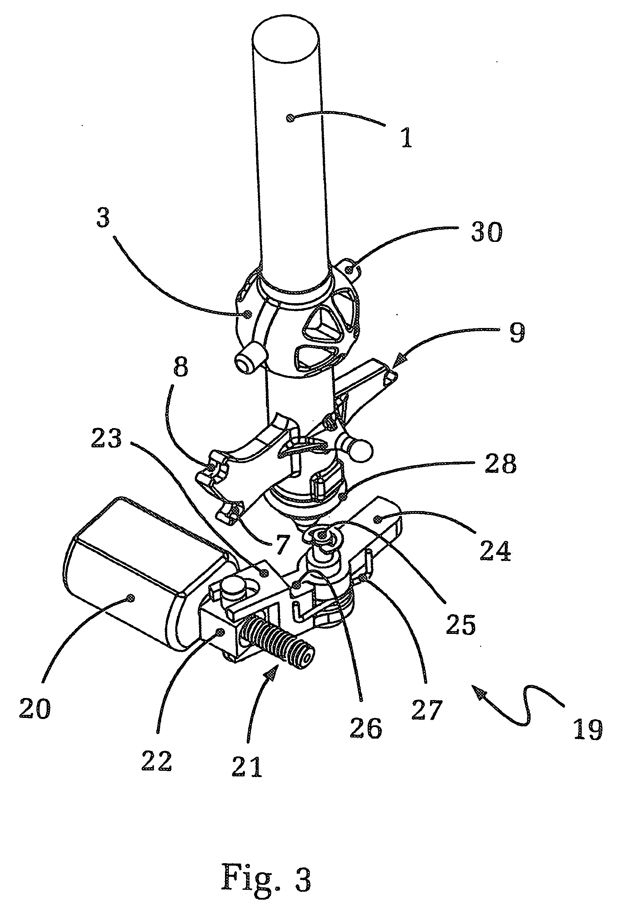

Wie insbesondere aus **Fig. 3** erkennbar wird, ist der Aktuatorhebel 23, 24 zweigeteilt ausgebildet, wobei sowohl die Antriebshälfte 23 als auch die Abtriebshälfte 24 auf der gemeinsamen Schwenkachse 25 gelagert sind. Zwischen der Antriebshälfte 23 und der Abtriebshälfte 24 ist ein wie ein Freilauf wirkender Anschlag 26 angeordnet. Der Freilaufanschlag 26 ist dabei durch die Freilauffeder 27 vorgespannt.

Der Wählhebel 1 kann somit mittels der Aktuatoreinrichtung 19-27 aus seiner Tippgassenstellung (vgl. **Fig. 4**) aktuatorisch in die Wählgassenstellung (vgl. **Fig. 5**) überführt werden. Sollte der Wählhebel 1 dabei gleichzeitig versehentlich festgehalten werden oder durch einen Gegenstand blockiert sein, so vermeidet der federbelastete Freilaufanschlag 26, 27 eine Überlastung oder Beschädigung der Aktuatoreinrichtung 19-27, indem statt einer Bewegung des Wählhebels 1 lediglich die Freilauffeder 27 vorgespannt wird. Sobald der Wählhebel 1 wieder freikommt, erfolgt anhand der in der Freilauffeder 27 gespeicherten Betätigungsenergie der Aktuatoreinrichtung 19-27 die selbsttätige Rückstellung des Wählhebels 1 aus der Tippgassenstellung (vgl. **Fig. 4**) in die Wählgassenstellung (vgl. **Fig. 5**). Damit die Rückstellbewegung des Wählhebels 1 aus der Tippgasse in die Wählgasse möglichst geräuschlos abläuft, weist der Wählhebel 1 an seinem unteren Ende einen mit Elastomer beschichteten Rand bzw. elastischen Ring 28 auf, an dem die Abtriebshälfte 24 des Aktuatorhebels 23, 24 zur Anlage kommen kann.

In den **Fig. 4** und **5** schließlich ist die aktuatorische Sperrmöglichkeit für die Schwenkbewegung des Wählhebels 1 aus der Wählgassenstellung **(****Fig. 5****)** in die Tippgassenstellung **(****Fig. 4****)** dargestellt. Man erkennt zunächst einmal insbesondere den Sperrschieber 18 (vgl. auch **Fig. 1** und **2**). Der Sperrschieber 18 ist horizontal verschieblich in entsprechenden Geradführungen der Gehäusehälften des (hier nicht dargestellten) Sockels 2 der Betätigungseinrichtung aufgenommen und geführt. Zur Ankopplung an den Wählhebel 1 besitzt der Sperrschieber 18 eine Langloch-Ausnehmung 31 (vgl. auch **Fig. 2**), in der sich der Wählhebel 1 frei entlang seiner Hauptbewegungsrichtung nach vorne bzw. nach hinten bewegen kann, während durch die Breitseiten der Ausnehmung 31 gleichzeitig eine Kopplung der seitlichen Schwenkbewegungen des Wählhebels 1 zwischen Tippgasse und Wählgasse und der entsprechenden Linearverschiebung des Sperrschiebers 18 erfolgt.

Um die Schwenkbewegung des Wählhebels 1 aus der Wählgasse **(****Fig. 5****)** in die Tippgasse **(****Fig. 4****)** in Abhängigkeit des momentanen Fahrzustand des Fahrzeugs bzw. in Abhängigkeit der momentan eingelegten Fahrstufe im Getriebe zu unterbinden, wird der (in **Fig. 5** durch den Sperrschieber 18 verdeckte) Ankerstift des elektromagnetischen Aktuators 29 nach unten ausgefahren und greift dort in eine entsprechende Ausnehmung des Sperrschiebers 18 ein. Um die Sperrung der Seitwärtsbewegung des Wählhebels aus der Wählgassenstellung gemäß **Fig. 5** wieder aufzuheben, wird der Ankerstift des Aktuators 29 eingefahren, und nach der Schwenkbewegung des Wählhebels 1 um die Lagerzapfen 30 ergibt sich die Situation gemäß **Fig. 4****.**

Im Ergebnis wird somit deutlich, dass mit der Erfindung eine Betätigungseinrichtung mit einer Sperranordnung geschaffen wird, die gegenüber dem Stand der Technik insbesondere den Vorteil aufweist, dass sie auch im Fall komplexer Sperraufgaben mit vergleichsweise geringem konstruktivem Aufwand auskommt. Wesentliche Vorteile werden in Form einer geringen Geräuschentwicklung sowie in Form von niedrigen Schaltzeiten erreicht. Ferner lassen sich undefinierte Betriebszustände bzw. Hakeln des Wählhebels bei etwaiger gleichzeitiger Betätigung von Wählhebel und Aktivierung der Sperrvorrichtung zuverlässig unterbinden. Schließlich lässt sich der Bewegungsbereich des Wählhebels passend zum jeweiligen Betriebszustand des Gangwechselgetriebes weitgehend frei positionieren.

Auf diese Weise lässt sich mit der Erfindung - insbesondere im Fall monostabiler Betätigungseinrichtungen - eine für den Fahrer zuverlässige taktile Rückmeldung über den tatsächlichen Schaltzustand und über die aktuellen Betätigungsmöglichkeiten beispielsweise bei einem Getriebeautomaten darstellen. Dank einfachen Aufbaus und hoher Zuverlässigkeit leistet die Erfindung einen wichtigen Beitrag zur Verbesserung von Bedienkomfort, Ergonomie, Kosteneffektivität und Sicherheit bei Betätigungseinrichtungen für Kraftfahrzeuggetriebe.

### Bezugszeichenliste

- 1: Wählhebel
- 2: Sockel
- 3: Schwenklagerung
- 4: Sperrvorrichtung, Sperranordnung
- 5, 6: Sperrausleger
- 7, 8, 9: Sperrkontur, Sperrausnehmung
- 10, 11, 12: Sperranker
- 8a: elastomeres Insert
- 13, 14, 15: Sperraktuator
- 16: Rastierpin
- 17: Rastierkulisse
- 18: Sperrschieber
- 19: Aktuatoreinrichtung
- 20: Elektromotor
- 21: Gewindespindel
- 22: Spindelmutter
- 23, 24: Antriebshälfte, Abtriebshälfte, Aktuatorhebel
- 25: Schwenkachse
- 26: Freilaufanschlag
- 27: Freilauffeder
- 28: Elastomerring
- 29: Sperraktuator
- 30: Lagerzapfen
- 31: Langloch-Ausnehmung

## Patentansprüche

1. Betätigungseinrichtung zur Auswahl von Schaltstufen eines Gangwechselgetriebes, die Betätigungseinrichtung umfassend einen zwischen zumindest drei Fahrstufenstellungen bewegbaren Wählhebel (1) sowie eine Sperrvorrichtung (4) zur Einschränkung des Bewegungsbereichs des Wählhebels (1), zum Ausschluss bestimmter Wählhebelstellungen bzw. zur Blockierung des Wählhebels (1),
**dadurch gekennzeichnet**
**dass** die Sperrvorrichtung (4) eine mit dem Wählhebel verbundene Auslegeranordnung (5, 6) mit einer Mehrzahl von Sperrkonturen (7, 8, 9) aufweist, wobei jede Sperrkontur (7, 8, 9) einer Wählhebelstellung zugeordnet und mit jeweils einem aktuatorisch aktivierbaren Sperrelement (10, 11, 12), einen Bewegungsanschlag für den Wählhebel (1) bildend, in Eingriff bringbar ist.

2. Betätigungseinrichtung nach Anspruch 1,
**dadurch gekennzeichnet,**
**dass** die Sperrelemente durch ausfahrbare Bolzen (10, 11, 12) von Aktuatoren (13, 14, 15) gebildet sind.

3. Betätigungseinrichtung nach Anspruch 1 oder 2,
**dadurch gekennzeichnet,**
**dass** die Sperrelemente durch bewegliche Anker (10, 11, 12) von Elektromagneten (13, 14, 15) gebildet sind.

4. Betätigungseinrichtung nach einem der Ansprüche 1 bis 3,
**dadurch gekennzeichnet,**
**dass** die Auslegeranordnung (5, 6) einstückig mit dem Schaft des Wählhebels (1) ausgebildet ist.

5. Betätigungseinrichtung nach einem der Ansprüche 1 bis 4,
**gekennzeichnet durch**
einen quer zur Hauptbetätigungsrichtung des Wählhebels (1) verschieblich angeordneten Querschieber (18), der ein den Wählhebel (1) im Sockelbereich (2) der Betätigungseinrichtung umschließendes Langloch (31) aufweist, wobei der Querschieber (18) **durch** einen Sperraktuator (29) blockierbar ist.

6. Betätigungseinrichtung nach einem der Ansprüche 1 bis 5,
**gekennzeichnet durch**
eine Aktuatoreinrichtung (19) zur aktuatorischen Rückstellung des Wählhebels (1) aus der Tippgasse in die Wählgasse.

7. Betätigungseinrichtung nach Anspruch 6,
**dadurch gekennzeichnet,**
**dass** die Aktuatoreinrichtung (19) ein Segment-Schneckengetriebe oder ein Spindelgetriebe (21, 22) aufweist.

8. Betätigungseinrichtung nach Anspruch 6 oder 7,
**dadurch gekennzeichnet,**
**dass** die Aktuatoreinrichtung (19) einen federbelasteten (27) Freilauf (26) aufweist, wobei Freilauf (26) und Freilauffeder (27) in Betätigungsrichtung der Aktuatoreinrichtung (19) wirken.

9. Betätigungseinrichlung nach einem der Ansprüche 1 bis 8,
**dadurch gekennzeichnet,**
**dass** der Wählhebel (1) monostabil ist.

10. Betätigungseinrichtung nach Anspruch 6,
**dadurch gekennzeichnet,**
**dass** die Sperrkonturen elastomere Anschlagsdämpfer (8a) aufweisen.

## Claims

1. Actuating device for the selection of shift stages of a gearshift transmission, the actuating device comprising a selector lever (1) which can be moved between at least three drive positions and also comprising a locking device (4) for restricting the range of movement of the selector lever (1), for eliminating certain selector lever positions and/or for blocking the selector lever (1),
**characterized**
**in that** the locking device (4) has an arm arrangement (5, 6) which is connected to the selector lever and which has a multiplicity of locking contours (7, 8, 9), wherein each locking contour (7, 8, 9) is assigned to one selector lever position and can be placed in engagement with in each case one locking element (10, 11, 12), which can be activated under actuator power, such that a movement stop for the selector lever (1) is formed.

2. Actuating device according to Claim 1,
**characterized**
**in that** the locking elements are formed by deployable bolts (10, 11, 12) of actuators (13, 14, 15).

3. Actuating device according to Claim 1 or 2,
**characterized**
**in that** the locking elements are formed by movable armatures (10, 11, 12) of electromagnets (13, 14, 15).

4. Actuating device according to one of Claims 1 to 3,
**characterized**
**in that** the arm arrangement (5, 6) is formed in one piece with the shank of the selector lever (1).

5. Actuating device according to one of Claims 1 to 4,
**characterized by**
a transverse slide (18) which is arranged so as to be slidable transversely with respect to the main actuation direction of the selector lever (1) and which has a slot (31) which surrounds the selector lever (1) in the pedestal region (2) of the actuating device, wherein the transverse slide (18) can be blocked by a locking actuator (29).

6. Actuating device according to one of Claims 1 to 5,
**characterized by**
an actuator device (19) for the actuator-powered return of the selector lever (1) from the tip gate into the selector gate.

7. Actuating device according to Claim 6,
**characterized**
**in that** the actuator device (19) has a segment-type worm gearing or a spindle gearing (21, 22).

8. Actuating device according to Claim 6 or 7,
**characterized**
**in that** the actuator device (19) has a springloaded (27) freewheel (26), wherein freewheel (26) and freewheel spring (27) act in the actuating direction of the actuator device (19).

9. Actuating device according to one of Claims 1 to 8,
**characterized**
**in that** the selector lever (1) is monostable.

10. Actuating device according to Claim 6,
**characterized**
**in that** the locking contours have elastomeric stop dampers (8a).

## Revendications

1. Dispositif d'actionnement pour la sélection de rapports de changement de vitesse d'une boîte de vitesse, le dispositif d'actionnement comprenant un levier de sélection (1) mobile entre au moins trois positions de rapports de marche, ainsi qu'un dispositif de blocage (4) pour limiter la plage de déplacement du levier de sélection (1), pour exclure des positions de levier de sélection déterminées ou pour verrouiller le levier de sélection (1),
**caractérisé en ce que**
le dispositif de blocage (4) comporte un agencement (5, 6) de bras en porte-à-faux, relié au levier de sélection, avec une pluralité de contours de blocage (7, 8, 9), chaque contour de blocage (7, 8, 9) étant associé à une position de levier de sélection et pouvant être mis en prise avec à chaque fois un élément de blocage (10, 11, 12) qui peut être activé par un actionneur, en formant une butée de déplacement pour le levier de sélection (1).

2. Dispositif d'actionnement selon la revendication 1,
**caractérisé en ce que**
les éléments de blocage sont formés par des boulons (10, 11, 12) d'actionneurs (13, 14, 15), qui peuvent être sortis.

3. Dispositif d'actionnement selon la revendication 1 ou 2,
**caractérisé en ce que**
les éléments de blocage sont formés par des armatures mobiles (10, 11, 12) d'électroaimants (13, 14, 15).

4. Dispositif d'actionnement selon l'une quelconque des revendication 1 à 3,
**caractérisé en ce que**
l'agencement (5, 6) de bras en porte-à-faux est formé d'une seule pièce avec la tige du levier de sélection (1).

5. Dispositif d'actionnement selon l'une quelconque des revendication 1 à 4,
**caractérisé par**
un coulisseau transversal (18) disposé de manière déplaçable transversalement à la direction d'actionnement principale du levier de sélection (1), lequel coulisseau transversal comporte un trou oblong (31) entourant le levier de sélection (1) dans la région de socle (2) du dispositif d'actionnement, le coulisseau transversal (18) pouvant être verrouillé par un actionneur de blocage (29).

6. Dispositif d'actionnement selon l'une quelconque des revendication 1 à 5,
**caractérisé par**
un dispositif d'actionneur (19) pour le rappel par actionneur du levier de sélection (1) de la voie de commande impulsionnelle dans la voie de sélection.

7. Dispositif d'actionnement selon la revendication 6,
**caractérisé en ce que**
le dispositif d'actionneur (19) comporte une transmission à vis sans fin segmentée ou une transmission à broche (21, 22).

8. Dispositif d'actionnement selon la revendication 6 ou 7,
**caractérisé en ce que**
le dispositif d'actionneur (19) comporte une course libre (26) sollicitée par un ressort (27), la course libre (26) et le ressort (27) de course libre agissant dans la direction d'actionnement du dispositif d'actionneur (19).

9. Dispositif d'actionnement selon l'une quelconque des revendication 1 à 8,
**caractérisé en ce que**
le levier de sélection (1) est monostable.

10. Dispositif d'actionnement selon la revendication 6,
**caractérisé en ce que**
les contours de blocage comportent des amortisseurs de butée (8a) élastomères.
